# EUROPÄISCHE PATENTSCHRIFT

(11) **EP 3 956 186 B1**
(45) Veröffentlichungstag und Bekanntmachung des Hinweises auf die Patenterteilung: **10.07.2024**
(21) Anmeldenummer: 20728408.4
(22) Anmeldetag: 08.05.2020
(51) Int. Cl.: B60S 3/00, G06Q 10/00, B08B 5/00, B60S 1/64

(54) **VERFAHREN ZUR INNENRAUMREINIGUNG EINES FAHRZEUGS, SERVICESTATION ZUR INNENRAUMREINIGUNG EINES FAHRZEUGS UND FAHRZEUG**
METHOD FOR THE INTERIOR CLEANING OF A VEHICLE, SERVICE STATION FOR THE INTERIOR CLEANING OF A VEHICLE, AND VEHICLE
PROCÉDÉ PERMETTANT LE NETTOYAGE DE L'HABITACLE D'UN VÉHICULE, STATION D'ENTRETIEN PERMETTANT LE NETTOYAGE DE L'HABITACLE D'UN VÉHICULE ET VÉHICULE

(30) Priorität: 24.05.2019 DE 102019207627
(43) Veröffentlichungstag der Anmeldung: 23.02.2022
(73) Patentinhaber: VOLKSWAGEN AKTIENGESELLSCHAFT, 38440 Wolfsburg (DE)
(72) Erfinder: HEROLD, Stephan, 38106 Braunschweig (DE); TORO RAMOS, Juan Mauricio, 38102 Braunschweig (DE); OTREMBA, Maik, 38118 Braunschweig (DE); SCHÜTZ, Daniel, 38165 Lehre (DE); TOPPEL, Kristoph, 30173 Hannover (DE)
(86) Internationale Anmeldenummer: PCT/EP2020/062893
(87) Internationale Veröffentlichungsnummer: WO 2020/239397

(56) Entgegenhaltungen:
- DE-A1- 102017 107 937
- DE-A1- 102017 206 232
- US-A1- 2002 121 291
- US-A1- 2018 126 960
- US-B1- 6 192 905
- US-B1- 6 213 134

## Beschreibung

Die Erfindung betrifft ein Verfahren zum Reinigen eines Fahrzeuginnenraums, insbesondere zum autonomen Reinigen des Innenraums eines autonomen Flottenfahrzeugs, sowie eine Servicestation zum autonomen Durchführen einer Innenraumreinigung an einem Fahrzeug. Die Erfindung betrifft ferner ein für das erfindungsgemäße Verfahren ausgestaltetes Fahrzeug.

Durch den Einsatz von Fahrerassistenzsystemen geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich.

Bislang sind solche autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Energieversorgung des Fahrzeugs kümmern.

Bereits heutzutage existieren jedoch verschiedenste Mobilitätskonzepte, insbesondere in urbanen Ballungsräumen. Beim sogenannten Carsharing greift dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann ungenutzte Parkzeit der Fahrzeuge minimiert werden.

Carsharing-Konzepte sind auch für andere Fahrzeuge, wie beispielsweise Fahrräder, Roller oder Transporter, bekannt. Ohne auf Personenkraftwagen beschränkt zu sein, wird nachfolgend in stellvertretender Weise lediglich auf Carsharing Bezug genommen. Die Erfindung kann darüber hinaus auch im Rahmen von Ride-Pooling und Ride-Hailing zur Anwendung kommen.

Ferner kann eine autonome Fahrzeugflotte eine Flotte von Privatfahrzeugen bezeichnen, die zeitweise für Fahrdienstleistungen, insbesondere für autonome Fahrdienstleistungen, zur Verfügung gestellt werden. In den vorgenannten Fällen ist unter einem Flottenbetreiber der Anbieter einer Anwendung zu verstehen, wobei die Anwendung zum Verbinden von Nutzern und Anbietern von Fahrdienstleistungen genutzt wird. Unter Umständen kann es sich bei dem Flottenbetreiber um einen Fahrzeughersteller oder dessen Servicepartner handeln.

Man unterscheidet insbesondere zwischen zentralen und dezentralen Carsharing-Konzepten. Bei zentralen Carsharing-Konzepten muss die Fahrzeugnutzung stets an festen Stationen begonnen und beendet werden. Es handelt sich somit im Wesentlichen um eine kurzzeitige klassische Fahrzeugvermietung. Bei dezentralen Carsharing-Konzepten kann die Fahrzeugnutzung hingegen an beliebigen Punkten eines Betriebsbereichs des Flottenanbieters begonnen und beendet werden. Insbesondere dezentrale Carsharing-Konzepte haben das Potential, die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich zur Verfügung stehen werden.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, die jeweils notwendigen Servicefahrten durchzuführen.

Hierbei besteht jedoch das Risiko einer unzureichenden Reinigung oder von Ausfällen der Fahrzeuge. Über die Betriebsfähigkeit der Einzelfahrzeuge hinaus ist es ferner erforderlich, die Funktionalität der Flotte zu erhalten. Insbesondere die dezentralen Carsharing-Konzepte erfordern zu jeder Zeit eine bestimmte Mindestanzahl einsatzbereiter Fahrzeuge. Nur so kann eine ausreichende Verfügbarkeit von Fahrzeugen für die Nutzer sichergestellt werden. Die Einsatzfähigkeit betrifft dabei ebenfalls die Sauberkeit der Fahrzeuge außen wie innen, insbesondere im Hinblick auf die Kundenzufriedenheit. Jede Reinigung schränkt jedoch die Fahrzeugverfügbarkeit ein, weswegen unnötige Reinigungen ebenfalls zu vermeiden sind.

Aus der DE 10 2017 206 232 A1 ist ein Reinigungssystem für einen Fahrzeuginnenraum bekannt, bei dem ein Reinigungsmedium über ein Düsensystem in Form eines Aerosols, durch Verneblung oder mittels eines Bubblers in den Fahrzeuginnenraum eingebracht wird. Auch die DE 10 2017 107 937 A1 offenbart ein System zur Reinigung eines Fahrzeuginnenraums, wobei Düsen zur Abgabe eines Reinigungsmediums in den Fahrzeugsitzen oder in einer entlang eines Fahrzeugsitzes verfahrbaren Reinigungsbürste angeordnet sind. Beim Einbringen eines Reinigungsmediums in Form eines Sprühnebels besteht jedoch das Problem, dass bestimmte Bereiche des Fahrzeuginnenraums, insbesondere hinterschnittene Bereiche, nur unzureichend mit Reinigungsmedium beaufschlagt werden. Die Verwendung verfahrbarer Reinigungsbürsten steigert zwar die Erreichbarkeit hinterschnittener Bereiche, ist jedoch konstruktiv aufwendig.

Aus der US 2002/0121291 A1 ist ein Verfahren zum Reinigen des Inneren eines Fahrzeugs bekannt, wobei ein Reinigungswerkzeug durch eine Tür oder ein Fenster in den Fahrzeuginnenraum eingebracht wird, um dort Fahrzeugkomponenten zu reinigen. Auch dabei ist das Reinigen von Fahrzeugkomponenten mit Hinterschneidungen schwierig.

Der Erfindung liegt daher die Aufgabe zugrunde, die Probleme des Standes der Technik zu überwinden oder zumindest zu verringern und ein Verfahren und eine Servicestation zur Innenraumreinigung eines Fahrzeugs bereitzustellen, welche eine verbesserte automatische Innenraumreinigung eines erfindungsgemäßen Fahrzeugs ermöglichen.

Die Aufgabe wird gelöst durch die Gegenstände der unabhängigen Patentansprüche. Bevorzugte Weiterbildungen sind Gegenstand der rückbezogenen Unteransprüche.

Ein erster Aspekt der Erfindung betrifft ein Verfahren einer Servicestation zur autonomen Reinigung eines Innenraums eines Fahrzeugs, insbesondere zur Reinigung zumindest einer Fahrzeugkomponente im Innenraum des Fahrzeugs. Bei dem Fahrzeug handelt es sich bevorzugt um ein autonomes Flottenfahrzeug, welches zum automatischen oder teilautomatischen Fahrbetrieb ausgebildet ist. Bevorzugt können die Fahrzeuge innerhalb eines Betriebsbereichs von Nutzern für autonome Fahrdienstleistungen genutzt werden, unabhängig davon, ob es sich um Fahrzeuge eines Carsharing-Anbieters oder um private Fahrzeuge handelt. Zumindest in dem Betriebsbereich ist bevorzugt die für einen autonomen Fahrbetrieb der Fahrzeuge notwendige Infrastruktur vorhanden. Der Betriebsbereich weist ferner bevorzugt zumindest eine zum Durchführen der erfindungsgemäßen Innenraumreinigung ausgestattete Servicestation auf. Ferner ist zumindest ein Server zur Kommunikation mit dem zumindest einen autonomen Fahrzeug und der zumindest einen Servicestation eingerichtet. Das erfindungsgemäße Verfahren wird bevorzugt in einem derartigen Betriebsbereich realisiert.

In dem erfindungsgemäßen Verfahren zum Reinigen eines Innenraums des Fahrzeugs erfolgt durch die Servicestation das Einleiten eines flüssigen Reinigungsmediums in einen Innenraum des Fahrzeugs über zumindest eine Zulaufschnittstelle des Fahrzeugs. Mit anderen Worten wird ein Reinigungsmedium, insbesondere ein mit Reinigungszusätzen versehenes wässriges Reinigungsmedium, in flüssiger Form in den Innenraum des Fahrzeugs eingefüllt. Unter flüssiger Form wird im Rahmen der vorliegenden Erfindung bevorzugt verstanden, dass das Reinigungsmedium als Flüssigkeit und nicht als Gemisch, insbesondere nicht als Dampf oder Nebel, vorliegt. Das flüssige Reinigungsmedium wird bevorzugt in den Fahrzeuginnenraum eingebracht, ohne beispielsweise mittels Düsen in einen Sprühnebel überführt zu werden.

Im erfindungsgemäßen Verfahren erfolgt das Einleiten des flüssigen Reinigungsmediums insbesondere derart, dass eine Immersion zumindest einer Oberfläche zumindest einer Fahrzeugkomponente des Fahrzeuginnenraums, wie ein Fahrzeugsitz oder ein Innenraumboden, in dem Reinigungsmedium erfolgt. Unter Immersion wird im Rahmen der vorliegenden Erfindung verstanden, dass die zumindest eine Oberfläche der zumindest einen Fahrzeugkomponente vollständig in dem flüssigen Reinigungsmedium getaucht wird. Darunter wird bevorzugt verstanden, dass die zumindest eine Oberfläche von einem Flüssigkeitskörper des flüssigen Reinigungsmediums umgeben ist. Bevorzugt übersteigt der Flüssigkeitskörper dabei eine reine Benetzung der zumindest einen Oberfläche mit dem flüssigen Reinigungsmedium. Erfindungsgemäß sollen die Fließeigenschaften des flüssigen Reinigungsmediums ausgenutzt werden, wobei diese Eigenschaften bei einer Benetzung aufgrund der geringen Schichtdicke und der herrschenden interatomaren Wechselwirkungen, wie beispielsweise nicht-kovalente Van-der-Waals Kräfte, nicht in Erscheinung treten.

Im erfindungsgemäßen Verfahren erfolgt schließlich das Ableiten des flüssigen Reinigungsmediums mit darin gelösten Verschmutzungen über zumindest eine Ablaufschnittstelle des Fahrzeugs. Das Ableiten des flüssigen Reinigungsmediums erfolgt dabei entweder kontinuierlich mit dem Einleiten des flüssigen Reinigungsmediums oder diskontinuierlich, nachdem das Reinigungsmedium für eine bestimmte Zeit auf zumindest eine Oberfläche zumindest einer Fahrzeugkomponente eingewirkt hat. Erfolgt das Ableiten kontinuierlich, erfolgt das Ableiten mit einer geringeren Volumenrate als das zeitgleiche Zuleiten des Reinigungsmediums über die Zulaufschnittstelle, um die Immersion der zumindest einen Oberfläche der zumindest einen Fahrzeugkomponente im Reinigungsmedium zu ermöglichen.

Das erfindungsgemäße Verfahren ermöglicht vorteilhaft das einfache und vollständige Reinigen von im Innenraum eines Fahrzeugs befindlichen Fahrzeugkomponenten. Indem die Fließeigenschaften des flüssigen Reinigungsmediums ausgenutzt werden, insbesondere dass sich dieses in flüssiger Form an die umgebende "Gefäß"-Form des Fahrzeuginnenraums anpasst, können auch Fahrzeugkomponenten mit komplexer Geometrie einfach gereinigt werden. Beispielsweise werden Hinterschneidungen von dem flüssigen Reinigungsmedium umflossen, so dass auch dahinter liegende Schattenbereiche durch das Reinigungsmedium gereinigt werden. Eine solche Reinigung von hinterschnittenen Bereichen ist durch das Einleiten eines Reinigungsmediums mittels Düsen infolge der weitgehend geradlinigen Ausbreitung des versprühten Reinigungsmediums nicht möglich. Der Einsatz von Nebel oder dergleichen allein garantiert in der Regel keine ausreihende Reinigungswirkung, sofern nicht zusätzlich mechanische Reinigungsmittel unterstützend eingesetzt werden. Das erfindungsgemäße Verfahren ermöglicht vorteilhaft eine automatische Innenraumreinigung allein mittels des flüssigen Reinigungsmediums ("Waschmaschinenprinzip").

Bevorzugt wird das flüssige Reinigungsmedium in dem erfindungsgemäßen Verfahren bis zum Erreichen eines vorbestimmten Flüssigkeitspegels in den Innenraum des Fahrzeugs eingeleitet. Mit anderen Worten erfolgt das Einleiten des flüssigen Reinigungsmediums solange, bis ein vorbestimmter Füllstand des Reinigungsmittels im Fahrzeuginnenraum erreicht ist. Dieser Füllstand kann dabei in Abhängigkeit der durchzuführenden Reinigung variieren, beispielsweise sofern lediglich ein Bodenbereich oder auch die Fahrzeugsitze gereinigt werden sollen. Das Erreichen des Füllstandes wird bevorzugt mittels im Fahrzeug befindlicher Sensoren, die über eine Steuereinheit und ein Kommunikationsmodul des Fahrzeugs mit der Servicestation kommunizieren, erfasst. Alternativ bevorzugt wird der Füllstand bei Kenntnis des Fahrzeugtyps anhand der Füllmenge des flüssigen Reinigungsmediums rechnerisch bestimmt. Bis zu dem vorbestimmten Füllstand liegt das Reinigungsmedium bevorzugt als Flüssigkeitskörper vor.

Das Ableiten des flüssigen Reinigungsmedium erfolgt im erfindungsgemäßen Verfahren bevorzugt passiv durch Öffnen zumindest einer Ablaufschnittstelle des Fahrzeugs. Die beim Ablassen auftretenden Strömungen unterstützen vorteilhaft den Reinigungseffekt des Reinigungsmediums. In einer ferner bevorzugten Durchführungsform erfolgt das Ableiten durch aktives Absaugen des flüssigen Reinigungsmediums aus dem Innenraum des Fahrzeugs. Das aktive Absaugen unterstützt dabei das Ausbilden von Strömungen im Fahrzeuginnenraum. Durch das Ausbilden von Strömungen beim Ableiten des Reinigungsmediums wird ebenfalls vorteilhaft das Sedimentieren gelöster Verschmutzungen im Fahrzeuginnenraum vermieden.

Wie bereits vorstehend ausgeführt, basiert das erfindungsgemäße Verfahren auf einer Immersion zumindest einer Oberfläche zumindest einer Fahrzeugkomponente in dem flüssigen Reinigungsmedium. Bevorzugt wird zumindest eine Fahrzeugkomponente, beispielsweise ein Innenraumboden, ein Fahrzeugsitzbrett oder ein gesamter Fahrzeugsitz, vollständig in dem flüssigen Reinigungsmedium getaucht. Das vollständige Tauchen der Fahrzeugkomponente ermöglicht vorteilhaft das vollständige Reinigen der gesamten Oberfläche der Fahrzeugkomponente. In einer besonders bevorzugten Durchführungsform wird der gesamte Fahrzeuginnenraum mit dem flüssigen Reinigungsmedium gefüllt. Somit werden vorteilhaft alle Oberflächen im Fahrzeuginnenraum von dem flüssigen Reinigungsmedium gereinigt. Ebenfalls bevorzugt wird der Fahrzeuginnenraum bis zu einer Oberkante der Fahrzeugsitze mit dem flüssigen Reinigungsmedium gefüllt, um die häufig verschmutzten Fahrzeugsitze zu reinigen.

In einer ebenfalls bevorzugten Durchführungsform des erfindungsgemäßen Verfahrens erfolgt nach dem Ableiten des flüssigen Reinigungsmediums ein Trocknen des Fahrzeuginnenraums. Unter Trocknen wird hierbei bevorzugt das gezielte Beaufschlagen des Fahrzeuginnenraums mit warmer und/oder trockener Luft bezeichnet, um einen Abtransport des im Fahrzeuginnenraum nach dem Ableiten verbleibenden Reinigungsmediums zu verbessern. Das Trocknen erfolgt bevorzugt mittels eines in den Fahrzeuginnenraum eingebrachten Trockenföns durch die Servicestation, besonders bevorzugt eines an einem Roboterarm der Servicestation angeordneten Trockenföns. Alternativ oder zusätzlich erfolgt das Trocknen mittels der Belüftungsanlage und/oder der Klimaanlage des Fahrzeugs, beispielsweise durch Einstellen einer starken Belüftung mit warmer Luft bei gleichzeitig geöffneten Fenstern.

Das erfindungsgemäße Verfahren zum Reinigen des Innenraums eines Fahrzeugs erfolgt bevorzugt teil- oder vollautomatisch im Rahmen einer autonomen Serviceinfrastruktur. Im Folgenden ist der bevorzugte Ablauf der erfindungsgemäßen automatischen Reinigung des Innenraums durch die Servicestation in der autonomen Serviceinfrastruktur beschrieben.

Zunächst werden in einer bevorzugten Durchführungsform des erfindungsgemäßen Verfahrens der Servicestation durch die Servicestation Informationen zu einem Verschmutzungsgrad des Fahrzeuginnenraums von einem Server empfangen. Bei dem Server handelt es sich bevorzugt um den Server eines Flottenbetreibers einer Flotte von in dem Betriebsbereich autonom operierender Fahrzeuge. Die empfangenen Informationen zu einem Verschmutzungsgrad des Fahrzeuginnenraums ist bevorzugt eine Information zu einer Zustandseigenschaft des Fahrzeuginnenraums, die angibt, dass und inwiefern ein Ist-Zustand der Verschmutzung des Fahrzeuginnenraums von einem Soll-Zustand des Fahrzeuginnenraums abweicht. Dabei gilt der Soll-Zustand für alle Fahrzeuge oder ist individuell für ein bestimmtes Fahrzeug, beispielsweise von dessen Nutzer oder Inhaber, festgelegt.

In einem nächsten Schritt des erfindungsgemäßen Verfahrens wird eine an dem Fahrzeuginnenraum durchzuführende Reinigung anhand der Informationen zum Verschmutzungsgrad des Fahrzeuginnenraums ermittelt. Eine Reinigung beschreibt dabei in allgemeinster Form eine Einwirkung auf zumindest eine Oberfläche zumindest einer Fahrzeugkomponente des Fahrzeugs, um dieses von dem vorliegenden Ist-Zustand der Verschmutzung in einen gewünschten Soll-Zustand zu überführen. Bevorzugt wird dabei eine Art der Innenraumreinigung anhand der Art des ermittelten Verschmutzungsgrads ermittelt, beispielsweise ob eine Bodenreinigung und/oder eine Reinigung der Fahrzeugsitze erfolgt. Ferner bevorzugt wird ein Reinigungsgrad anhand des Verschmutzungsgrads ermittelt. Die Art der Innenraumreinigung definiert dabei beispielsweise einen Füllstand, bis zu dem das flüssige Reinigungsmedium eingefüllt wird. Art und Grad der Innenraumreinigung definieren bevorzugt die Art des eingesetzten Reinigungsmediums, wobei beispielsweise bei einem die Fahrzeugsitze einschließenden höheren Füllstand ein mildes Reinigungsmedium gewählt wird.

Im erfindungsgemäßen Verfahren wird ferner bevorzugt zumindest ein zum Durchführen der ermittelten Reinigung verfügbares Servicemodul der Servicestation ermittelt. Dabei ist ein Servicemodul eine funktionelle Baugruppe der Servicestation, die zum Durchführen einer erfindungsgemäßen Innenraumreinigung des Fahrzeugs ausgebildet ist. Bevorzugt weist die Servicestation eine Mehrzahl solcher Servicemodule auf. Das verfügbare Servicemodul wird bevorzugt anhand von Informationen zur Belegung oder Auslastung der Servicemodule, die in der Servicestation vorliegen, ausgewählt. Das verfügbare Servicemodul ist bevorzugt dazu ausgebildet, die Innenraumreinigung voll- oder teilautonom durchzuführen. Vollautonome Durchführung bezeichnet dabei die Durchführung ohne jedes menschliches Zutun.

Im erfindungsgemäßen Verfahren erfolgt schließlich die teil- oder vollautonome Innenraumreinigung des Fahrzeugs in der Servicestation wie vorstehend beschrieben. Die Reinigung erfolgt bevorzugt, sobald ein Fahrzeug an der Servicestation eintrifft. Das Eintreffen des Fahrzeugs wird dabei insbesondere mittels einer Sensorik und/oder eines Kommunikationsmoduls der Servicestation erkannt beziehungsweise erfasst. Die Innenraumreinigung erfolgt bevorzugt mit dem zumindest einen zum Durchführen der Reinigung verfügbaren Servicemodul. Das Servicemodul ist wie vorstehend beschrieben ausgebildet, arbeitet teil- oder vollautonom und benötigt keine oder minimale Einwirkung eines Nutzers. Bevorzugt erfolgt die Reinigung mittels des zumindest einen Servicemoduls vollautonom.

Das erfindungsgemäße Verfahren ermöglicht vorteilhaft eine automatische Reinigung des Innenraums eines autonomen Fahrzeugs, idealerweise ohne jegliche Einwirkung eines Nutzers. Somit wird stets ein sauberes Erscheinungsbild der Fahrzeuge gewährleistet. Im Hinblick auf Carsharing-Anbieter bleibt durch das autonome und bedarfsgerechte Reinigen der Fahrzeuge auch deren kommerzielle Einsatzfähigkeit weitestmöglich erhalten. Indem alle Schritte des erfindungsgemäßen Verfahrens vollautomatisch durchgeführt werden können, werden ferner vorteilhaft der Personalaufwand und die damit verbundenen Kosten reduziert.

In einer bevorzugten Durchführungsform des erfindungsgemäßen Verfahrens weisen die Informationen zu dem Verschmutzungsgrad des Fahrzeuginnenraums von dem Fahrzeug selbst erfasste erste Informationen auf. Das Fahrzeug weist hierfür bevorzugt zumindest einen zum Erfassen von Fahrzeugdaten ausgebildeten zweiten Sensor auf. Bei dem Sensor handelt es sich bevorzugt um eine Kamera zum Erfassen eines Verschmutzungsgrads zumindest einer Oberfläche zumindest einer Fahrzeugkomponente. Die ersten Informationen werden vom Fahrzeug an den Server übermittelt, dort verarbeitet und an die Servicestation weitergeleitet.

Alternativ oder zusätzlich weisen die Informationen zu dem Verschmutzungsgrad des Fahrzeuginnenraums auf einer Nutzereingabe basierende zweite Informationen auf. Die zweiten Informationen, sprich die Nutzereingabe, sind dabei besonders bevorzugt über eine Fahrzeugschnittstelle und/oder ein mobiles Endgerät erfasst worden. In einer Durchführungsform charakterisieren die zweiten Informationen den Grad der Verschmutzung, beispielsweise anhand einer vorgegebenen Skala, und/oder spezifizieren die Art und/oder den Ort der Verschmutzung, beispielsweise auf dem Fahrzeugboden oder den Fahrzeugsitzen.

Ebenfalls bevorzugt enthalten die zweiten Informationen vom Nutzer aufgenommene Bildinformationen, beispielsweise mit dem Smartphone aufgenommene Bilder zumindest einer Fahrzeugkomponente des Fahrzeuginnenraums. Die Nutzereingabe erfolgt ferner bevorzugt in Reaktion auf eine an den Nutzer ausgegebene entsprechende Eingabeaufforderung. Die zweiten Informationen werden vom Fahrzeug oder dem Smartphone des Nutzers an den Server übermittelt, dort gegebenenfalls verarbeitet und an die Servicestation weitergeleitet.

Alternativ oder zusätzlich weisen die Informationen zu dem Verschmutzungsgrad des Fahrzeuginnenraums von dem Server bereitgestellte dritte Informationen auf, wobei es sich bevorzugt um fahrer- sowie fahrzeugunspezifische Informationen handelt. Die dritten Informationen charakterisieren bevorzugt Rahmenbedingungen, die mit einer bestimmten Wahrscheinlichkeit eine spezielle Verschmutzung bewirken können. Beispielsweise enthalten die dritten Informationen Daten zum Wetter, zu jahreszeitlich bedingtem Pollenflug oder dergleichen. Die dritten Informationen werden von dem Server an die Servicestation übermittelt.

Ebenfalls bevorzugt erfolgt im erfindungsgemäßen Verfahren das Erfassen von ersten Kontrollinformationen mittels des ersten Kontrollmoduls, besonders bevorzugt mittels des zumindest einen Sensors des ersten Kontrollmoduls. Dies erfolgt bevorzugt nach dem Eintreffen des Fahrzeugs an der erfindungsgemäßen Servicestation. Vorteilhaft kann mittels der ersten Sensoren ein Grad der Verschmutzung des Innenraums eines Fahrzeugs mit hoher Genauigkeit festgestellt werden, beispielsweise wenn eine Servicestation wesentlich besser ausgestattete Sensoren aufweist, als das Fahrzeug selbst oder ein Smartphone.

Gemäß dieser bevorzugten Durchführungsform erfolgt bevorzugt ein Ermitteln der am Fahrzeug durchzuführenden Innenraumreinigung anhand der Informationen zum Verschmutzungsgrad des Innenraums und anhand der ersten Kontrollinformationen zum Verschmutzungsgrad des Fahrzeuginnenraums. Mit anderen Worten werden die ersten Kontrollinformationen zusätzlich zu den zuvor genannten ersten bis dritten Informationen berücksichtigt, um die Reinigung an die tatsächliche Verschmutzung anzupassen. Somit kann vorteilhaft eine anhand der ersten bis dritten Informationen ermittelte Reinigung verifiziert, modifiziert und/oder adaptiert werden.

Der Empfang der vorgenannten ersten bis dritten Informationen ermöglicht vorteilhaft das Ermitteln einer geeigneten Reinigungsprozedur bereits vor dem Eintreffen des Fahrzeugs in der Servicestation. Insbesondere wird eine vielseitige Datenbasis geschaffen, die verschiedene Datenquellen berücksichtigt und somit robust gegen den Wegfall einzelner Informationen ist. Ferner vorteilhaft wird eine an der Servicestation selbst vorhandene, spezialisierte Sensorik zum Erfassen der ersten Kontrollinformationen genutzt. Somit kann beispielsweise eine vorläufig bestimmte Reinigung nach Ankunft des Fahrzeugs weiter modifiziert werden.

In einer besonders bevorzugten Durchführungsform des erfindungsgemäßen Verfahrens erfolgt ferner ein Erfassen von zweiten Kontrollinformationen zu einem Verschmutzungsgrad des Fahrzeuginnenraums mittels des zweiten Kontrollmoduls der Servicestation. Ferner bevorzugt erfolgt im erfindungsgemäßen Verfahren ferner das Ermitteln eines Effektivitätsmaßes der durchgeführten Reinigung anhand der zweiten Kontrollinformationen. Mit anderen Worten wird anhand der zweiten Kontrollinformationen vorteilhaft eine Qualität oder ein Effektivitätsmaß der vorab durchgeführten Reinigung bestimmt.

Besonders bevorzugt wird ein mit den zweiten Kontrollinformationen abgebildeter Ist-Zustand einer Verschmutzung des Fahrzeuginnenraums mit einem Ist-Zustand einer Verschmutzung vor der Innenraumreinigung, wie beispielsweise anhand der ersten bis dritten Informationen und ersten Kontrollinformationen abgebildet, verglichen. Alternativ wird ein mit den zweiten Kontrollinformationen abgebildeter Ist-Zustand einer Verschmutzung des Fahrzeugsinnenraums mit einem in der ermittelten und durchgeführten Innenraumreinigung angestrebten Soll-Zustand der Reinheit der zumindest einen Fahrzeugscheibe des Fahrzeugs verglichen. Anhand eines der vorgenannten Vergleiche wird bevorzugt ein Effektivitätsmaß der durchgeführten Innenraumreinigung ermittelt, beispielsweise als Verhältnis des Verschmutzungsgrads gemäß der ersten bis dritten Informationen (und gegebenenfalls der ersten Kontrollinformationen) und des Verschmutzungsgrads gemäß der zweiten Kontrollinformationen. Anhand des bestimmten Effektivitätsmaßes ist die Qualität der durchgeführten Reinigung vorteilhaft quantisierbar und kann somit besser evaluiert werden.

Besonders bevorzugt wird das Effektivitätsmaß mit einem vorbestimmten Grenzwert, sprich einem vorbestimmten Grenzwert für das Effektivitätsmaß, verglichen. Ist das Effektivitätsmaß gleich oder größer als der vorbestimmte Grenzwert, gilt die autonome Innenraumreinigung als erfolgreich abgeschlossen. Ist das Effektivitätsmaß jedoch geringer als der vorbestimmte Grenzwert, erfolgt bevorzugt ein erneutes Durchführen der Innenraumreinigung mittels derselben oder anderer Servicemodule der Servicestation. Alternativ oder zusätzlich erfolgt die Ausgabe einer Fehlermeldung, beispielsweise wenn nach dem erneuten Durchführen der Innenraumreinigung, zweite Kontrollinformationen erfasst wurden, die zu einem zu geringen Effektivitätsmaß korrespondieren.

Die erfindungsgemäße Servicestation ist bevorzugt Teil einer Infrastruktur zum autonomen Reinigen eines Fahrzeugs, wie im Folgenden in größerem Detail beschrieben. Das erfindungsgemäße Verfahren, insbesondere die Reinigung des Fahrzeuginnenraums, erfolgt dabei bevorzugt innerhalb der Servicestation durch das Servicemodul. Die erfindungsgemäße Servicestation ist bevorzugt Teil einer Service-Infrastruktur, die zumindest eine Servicestation und bevorzugt eine Vielzahl von in der Servicestation angeordneten oder mit diesen assoziierten Servicemodulen aufweist, welche in einem Betriebsgebiet der autonomen Fahrzeugflotte angeordnet sind. Die Anzahl und Dichte der Servicestationen und Servicemodule ist dabei bevorzugt an die Anzahl der autonomen Flottenfahrzeuge sowie an den Bedarf von Serviceaktionen beziehungsweise die Frequenz benötigter Serviceaktionen angepasst. Jede Servicestation ist bevorzugt zur Kommunikation mit autonomen Fahrzeugen, den Servicemodulen, einem Server und/oder anderen Servicestationen ausgebildet.

Im Rahmen dieser Service-Infrastruktur erfolgt bevorzugt das Ermitteln der verfügbaren (und geeigneten) Servicemodule durch eine Servicestation, an die von einem Fahrzeug oder dem Server Informationen zu einem Servicebedarf eines Fahrzeugs übermittelt wurden. Dabei berücksichtigt die Servicestation ferner die Auslastung der Servicemodule. Das Ermitteln der Eignung erfolgt dabei bevorzugt automatisch, beispielsweise datenbankbasiert, mittels zumindest eines Look-Up-Tables, LUT, mittels zumindest eines Algorithmus und/oder mittels einer künstlichen Intelligenz. Alternativ oder zusätzlich bevorzugt erfolgt das Ermitteln des zumindest einen geeigneten Servicemoduls teilweise durch eine Nutzereingabe, beispielsweise eines Mitarbeiters des Flottenbetreibers in Reaktion auf eine Eingabeaufforderung.

Im Rahmen der Service-Infrastruktur erfolgt ferner bevorzugt eine autonome Fahrt des Fahrzeugs zu dem ermittelten verfügbaren (und geeigneten) Servicemodul. Die Fahrt erfolgt dabei, nachdem das verfügbare (und geeignete) Servicemodul ermittelt wurde. Sofern das betreffende autonome Fahrzeug in dem verfügbaren und geeigneten Servicemodul beziehungsweise der entsprechenden Servicestation eintrifft, erfolgt ferner die Durchführung einer ermittelten und dem Servicebedarf entsprechenden Serviceaktion teil- oder vollautonom.

Im Rahmen der vorliegenden Anmeldung wird unter einem Servicebedarf des Fahrzeugs bevorzugt verstanden, dass ein Verschmutzungsgrad zumindest einer Oberfläche zumindest einer Fahrzeugkomponente im Fahrzeuginnenraum einen vorbestimmten Grenzwert überschreitet. Infolge dieses Servicebedarfs sucht das Fahrzeug bevorzugt die erfindungsgemäße Servicestation auf, wo das erfindungsgemäße Verfahren zur Reinigung des Fahrzeuginnenraums voll- oder teilautonom durchgeführt wird.

Darüber hinaus kann ein Servicebedarf des Fahrzeugs im Rahmen der vorliegenden Anmeldung einen niedrigen Füllstand des Energiespeichers des Fahrzeugs, also beispielsweise ein niedriger State of Charge, SOC, eines elektrischen Energiespeichers oder ein niedriger Füllstand eines Tanks für fossile Kraftstoffe oder Wasserstoff betreffen. Ebenfalls bevorzugt kann ein Servicebedarf eine Fehlermeldung des Fahrzeugs betreffen, besonders bevorzugt eine OBD2 Fehlermeldung. Ferner bevorzugt kann der Servicebedarf eine Mitteilung zum Ablauf eines Serviceintervalls, beispielsweise für einen Ölwechsel, betreffen. Ebenfalls bevorzugt kann der Servicebedarf weiteren Reinigungsbedarf des Fahrzeugs betreffen.

Im erfindungsgemäßen Verfahren ist eine Serviceaktion eine Einwirkung auf das Fahrzeug, um dieses oder diesen von dem vorliegenden Ist-Zustand in einen gewünschten Soll-Zustand zu überführen. Bevorzugt wird eine Art der Serviceaktion dabei anhand der Art des ermittelten Servicebedarfs ermittelt, sodass unter einer Serviceaktion eine zu einem bestimmten Servicebedarf korrespondierende Einwirkung auf das Fahrzeug verstanden wird. Zu einer Verschmutzung des Fahrzeugs korrespondiert dabei beispielsweise eine Reinigung des Fahrzeugs. Insbesondere korrespondiert zu einer Verschmutzung des Fahrzeuginnenraums das Durchführen des erfindungsgemäßen Verfahrens zur Innenraumreinigung. Ferner bevorzugt korrespondiert zu einem niedrigen Füllstand des Energiespeichers ein Auffüllen des Energiespeichers und zu einer detektierten Fehlermeldung des Fahrzeugs eine Wartung oder eine Reparatur des Fahrzeugs.

Die Verfahrensschritte des erfindungsgemäßen Verfahrens können durch elektrische oder elektronische Bauteile oder Komponenten (Hardware), durch Firmware (ASIC) implementiert sein oder durch Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, beispielsweise einem Kommunikationsmodul sowie einem oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf einer Vielzahl von Geräten verteilt vorliegen kann, um die Schritte des erfindungsgemäßen Verfahrens auszuführen, ohne von dem zuvor beschriebenen erfindungsgemäßen Verfahren abzuweichen. Ein weiterer Aspekt der vorliegenden Erfindung betrifft eine Servicestation für ein Fahrzeug, insbesondere eine zum autonomen Durchführen einer Serviceaktion für ein Fahrzeug, insbesondere für die Fahrzeuge einer autonomen Fahrzeugflotte, ausgebildete Servicestation. Die erfindungsgemäße Servicestation weist dabei insbesondere ein zum Durchführen einer autonomen Innenraumreinigung des Fahrzeugs ausgebildetes Servicemodul auf, welches zumindest einen Roboterarm mit einer daran angeordneten Zuleitung für ein flüssiges Reinigungsmedium und eine zur Steuerung des Roboterarms ausgebildete Steuereinheit auf. Die Servicestation weist ferner einen Tank für ein flüssiges Reinigungsmedium auf oder ist mit einer Zuführleitung für ein flüssiges Reinigungsmedium verbunden.

Die an dem Roboterarm befindliche Zuleitung ist bevorzugt zum Fördern von zumindest einer Art flüssigem Reinigungsmedium in zumindest eine Richtung ausgebildet und ist bevorzugt zum Zuleiten des flüssigen Reinigungsmediums in das Fahrzeug und besonders bevorzugt zum Absaugen des flüssigen Reinigungsmediums aus dem Fahrzeug ausgebildet. Ferner ist die Zuleitung zum Einleiten des flüssigen Reinigungsmediums in den Innenraum des Fahrzeugs an zumindest eine Zulaufschnittstelle des Fahrzeugs fluiddicht ankoppelbar. Die Zuleitung umfasst erfindungsgemäß einen flexiblen Abschnitt und einen Koppelabschnitt, wobei der flexible Abschnitt dazu ausgebildet ist, eine fluiddichte Verbindung zwischen dem Tank oder der Zuführleitung des Reinigungsmediums und dem Koppelabschnitt herzustellen, insbesondere unabhängig von den Bewegungen des Roboterarms.

Der Koppelabschnitt ist erfindungsgemäß dazu ausgebildet, mit zumindest einer Zulaufschnittstelle des Fahrzeugs fluiddicht verbunden zu werden, beispielsweise über einen mittels Dichtringen abgedichteten Bajonettverschluss. Der fluiddichte Anschluss einer Schlauchverbindung an einen Fluidport ist dem Fachmann bekannt und kann vielfältig ausgestaltet werden. Die Zulaufschnittstelle ist vorteilhaft dazu ausgebildet, das Einleiten des flüssigen Reinigungsmediums in den Fahrzeuginnenraum zu ermöglichen und ist beispielsweise an weitere Fluidleitungen im Inneren des Fahrzeugs angeschlossen, die im Innenraum münden. Die spezifische Ausgestaltung des Koppelabschnitts, der Zulaufschnittstelle und etwaiger Fluidleitungen liegt im fachmännischen Können und ist lediglich derart zu konzipieren, dass das Zuleiten eines flüssigen Reinigungsmediums in den Fahrzeuginnenraum gewährleistet ist.

Die Steuereinheit der erfindungsgemäßen Servicestation ist ferner zum Durchführen des erfindungsgemäßen Verfahrens zur Innenraumreinigung wie vorstehend beschrieben ausgebildet. Die Steuereinheit ist insbesondere dazu ausgebildet, das Eintreffen eines Fahrzeugs in der Servicestation, insbesondere dem Servicemodul, zu detektieren. Die Steuereinheit ist ferner dazu ausgebildet, die relative oder absolute Lage zumindest einer Zulaufschnittstelle des Fahrzeugs zu ermitteln und ist ferner dazu ausgebildet, den Roboterarm derart anzusteuern, dass der Koppelabschnitt der Zuleitung mit der Zulaufschnittstelle in Eingriff gebracht wird. Ferner ist die Steuereinheit dazu ausgebildet, den Koppelabschnitt fluiddicht mit der Zulaufschnittstelle zu verbinden, beispielsweise durch Drehen der Zuleitung oder durch einen in dem Koppelabschnitt integrierten Mechanismus.

Die Steuereinheit ist ferner dazu ausgebildet, das flüssige Reinigungsmedium über die Zuleitung und die Zulaufschnittstelle in den Fahrzeuginnenraum einzuleiten, so dass zumindest eine Oberfläche einer Fahrzeugkomponente, bevorzugt die gesamte Fahrzeugkomponente, in dem flüssigen Reinigungsmittel getaucht ist beziehungsweise bis ein vorbestimmter Füllstand erreicht ist. Die Steuereinheit ist ferner dazu ausgebildet, das flüssige Reinigungsmedium aus dem Fahrzeuginnenraum abzuleiten, entweder durch aktives Absaugen mittels der Zuleitung oder durch passives Ablassen des Reinigungsmittels aus dem Fahrzeuginnenraum. Sofern die Steuereinheit zum Durchführen des Verfahrens auf Vorrichtungen des Fahrzeugs angewiesen ist, wie beispielsweise Füllstandsensoren oder ein Ablassventil desselben, ist die Steuereinheit bevorzugt zur Kommunikation mit der entsprechenden Vorrichtung des Fahrzeugs ausgebildet.

Der Roboterarm der erfindungsgemäßen Servicestation, insbesondere des Servicemoduls weist bevorzugt zumindest ein Gelenk und zumindest einen mit dem Gelenk verbundenen Aktuator auf. Somit ist der Roboterarm dazu in der Lage, den bevorzugt an einem freien Ende des Roboterarms angeordneten Koppelabschnitt gezielt mit der Zulaufschnittstelle des Fahrzeugs in Eingriff zu bringen. Bevorzugt weist der Roboterarm eine Mehrzahl von Gelenken auf, wobei jedes mit zumindest einem Aktuator verbunden ist. Somit kann der Roboterarm vorteilhaft auch komplexere Bewegungen ausführen beziehungsweise komplexere Geometrien annehmen. Dies ermöglicht beispielsweise, die erfindungsgemäße Servicestation vorteilhaft auch zum Trocknen des Fahrzeuginnenraums nach der Innenraumreinigung zu verwenden. Der Roboterarm ist für die Trocknungen besonders bevorzugt auch dazu ausgebildet, durch eine geöffnete Tür oder ein geöffnetes Fenster des Fahrzeugs in den Fahrzeuginnenraum eingeführt zu werden.

In einer bevorzugten Ausführungsform der erfindungsgemäßen Servicestation weist diese zumindest einen Ablauf für das Reinigungsmedium auf. Da beim Ablassen des flüssigen Reinigungsmediums größere Mengen der Flüssigkeit aufzufangen sind, ist die Servicestation, insbesondere das Servicemodul, zum Auffangen größerer Mengen Flüssigkeiten ausgestaltet, beispielsweise durch eine entsprechende Ausgestaltung des Bodens mit Vertiefung und Ablauf. Besonders bevorzugt ist die Servicestation (das Servicemodul) zum Aufbereiten des aufgefangenen Grauwassers (Reinigungsmedium mit darin gelösten Verschmutzungen), sprich zu dessen Reinigung und erneute Verwendung als flüssiges Reinigungsmedium ausgestaltet. Die Ausgestaltung der Servicestation mit Ablauf ist insbesondere für eine Verfahrensführung mit passivem Ablassen des flüssigen Reinigungsmediums aus dem Fahrzeug geeignet.

Ebenfalls bevorzugt weist die erfindungsgemäße Servicestation, insbesondere das Servicemodul, eine zum aktiven Ableiten des Reinigungsmediums aus dem Fahrzeuginnenraum ausgebildete Zuleitung auf. In dieser Ausgestaltung ist die Zuleitung bevorzugt mit einer Pumpvorrichtung, insbesondere einer zum bidirektionalen Fördern einer Flüssigkeit durch die Zuleitung ausgebildeten Pumpvorrichtung, verbunden. Ferner bevorzugt ist die Zuleitung selektiv mit einem Tank oder einer Zuführleitung für das flüssige Reinigungsmedium oder einem Aufbereiter verbindbar, beispielsweise über ein 3-Wege-Ventil.

Ferner bevorzugt weist die Servicestation, insbesondere das Servicemodul, zumindest ein Trockenfön zum Trocknen des Fahrzeuginnenraums auf. Der Trockenfön ist bevorzugt als eigenständige Vorrichtung ausgebildet, mit der ein Fahrzeuginnenraum beispielsweise durch ein geöffnetes Fahrzeugdach, durch geöffnete Fahrzeugfenster und/oder durch eine geöffnete Fahrzeugtür getrocknet werden kann. Alternativ ist der Trockenfön an dem Roboterarm befestigt, und kann mittels des Roboterarms in das Fahrzeuginnere eingeführt werden.

In einer bevorzugten Ausführungsform der erfindungsgemäßen Servicestation ist diese dazu ausgebildet, in einer Serviceinfrastruktur für autonome Flottenfahrzeuge zum Einsatz zu kommen. Besonders bevorzugt weist die erfindungsgemäße Servicestation hierzu ein für die Kommunikation mit den Fahrzeugen und/oder einem Server eines Flottenbetreibers eingerichtetes (zweites) Kommunikationsmodul auf. Das (zweite) Kommunikationsmodul ist beispielsweise ein WLAN- oder Mobilfunk-Modul und ist vorzugsweise zum Durchführen einer Car2Car oder Car2X Kommunikation ausgebildet. Das zweite Kommunikationsmodul ist bevorzugt dafür ausgebildet, entsprechend eines von dem ersten Kommunikationsmodul und/oder von dem Server genutzten Kommunikationsprotokolls zu kommunizieren.

Die Steuereinheit der Servicestation ist ferner bevorzugt zum Ermitteln einer an dem Fahrzeug durchzuführenden Serviceaktion eingerichtet. Die (zweite) Steuereinheit ist insbesondere dazu ausgebildet, die Serviceaktion anhand von Informationen zu einem Servicebedarf, insbesondere einem Verschmutzungsgrad des Fahrzeuginnenraums zu ermitteln. Das zweite Kommunikationsmodul ist bevorzugt dazu ausgebildet, Informationen zu diesem Servicebedarf, vor allem zum Verschmutzungsgrad, von dem Fahrzeug und/oder dem Server zu empfangen.

In einer besonders bevorzugten Ausführungsform ist die (zweite) Steuereinheit der erfindungsgemäßen Servicestation dafür eingerichtet, eine an dem Fahrzeug durchzuführende Innenraumreinigung anhand vom Fahrzeug oder vom Server empfangener Informationen zu ermitteln. Dabei wird insbesondere die Art der Innenraumreinigung, beispielsweise Boden- und/oder Sitzreinigung ermittelt. Gegebenenfalls werden weitere Randbedingungen, beispielsweise zum Oberflächenmaterial der im Fahrzeuginnenraum vorhandenen Fahrzeugkomponenten und zu den dafür geeigneten Reinigungsmitteln, ermittelt. Besonders bevorzugt ist die Steuereinheit dafür eingerichtet, die an dem Fahrzeug durchzuführende Reinigung anhand von Informationen zu ermitteln, die mittels des Kommunikationsmoduls der Servicestation von dem Fahrzeug oder von dem Server empfangen wurden.

In einer ebenfalls bevorzugten Ausführungsform der erfindungsgemäßen Servicestation weist diese zusätzlich ein dem Servicemodul vorgelagertes erstes Kontrollmodul auf. Das erste Kontrollmodul weist dabei zumindest einen ersten Sensor auf, der zum Erfassen zumindest einer einen Reinigungsbedarf des Fahrzeuginnenraums charakterisierenden Größe ausgebildet ist. Mit anderen Worten ist das erste Kontrollmodul dazu ausgebildet (eingerichtet), zumindest einen Reinigungsbedarf des Innenraums zu detektieren. Somit kann vorteilhaft ein zuvor erfasster Reinigungsbedarf beziehungsweise eine daraus ermittelte Innenraumreinigung verifiziert und modifiziert werden. Ebenfalls bevorzugt wurde im erfindungsgemäßen Verfahren vorab lediglich eine Art der Innenraumreinigung bestimmt. In diesem Fall wird anhand von mittels des ersten Kontrollmoduls erfassten Informationen ein Grad der Reinigung bestimmt.

In einer besonders bevorzugten Ausführungsform ist das erste Kontrollmodul als eine Scanbrücke oder dergleichen ausgebildet. Ebenfalls bevorzugt weist das erste Kontrollmodul zumindest einen Sensor, beispielsweise einen optischen Sensor wie eine Kamera, zum Erfassen einer Verschmutzung des Fahrzeuginnenraums auf. Ferner bevorzugt ist das erste Kontrollmodul zusätzlich zum Erfassen einer Vielzahl von fahrzeugspezifischen Informationen ausgebildet. Das erste Kontrollmodul ist besonders bevorzugt dazu ausgebildet, einen Fahrzeugtyp, eine Fahrzeuggröße, Einstellwerte von verstellbaren Fahrzeugkomponenten (Fahrzeugsitze, Lüftungsklappen, Rückspiegel etc.) und dergleichen zu erfassen. Die zweite Steuereinheit ist bevorzugt dazu ausgebildet, die Innenraumreinigung anhand zusätzlich erfasster fahrzeugspezifischer Informationen anzupassen. Beispielsweise wird eine Innenraumreinigung des Fahrzeugs in Abhängigkeit der Materialien der Fahrzeugsitze angepasst. Darüber hinaus weist das erste Kontrollmodul bevorzugt Mittel zum Feststellen eines weitergehenden Servicebedarfs auf, beispielsweise Mittel zum Auslesen eines Füllstands eines Energiespeichers und/oder Mittel zum Auslesen einer Fehlermeldung des Kraftfahrzeugs.

In einer ebenfalls bevorzugten Ausführungsform der erfindungsgemäßen Servicestation weist diese ferner ein dem Servicemodul nachgelagertes zweites Kontrollmodul auf. Das zweite Kontrollmodul weist dabei zumindest einen zweiten Sensor auf, der zum Erfassen zumindest einer den Reinigungsbedarf des Fahrzeuginnenraums charakterisierenden Größe ausgebildet ist. Mit anderen Worten ist das zweite Kontrollmodul ebenfalls dazu ausgebildet, zumindest einen Reinigungsbedarf des Fahrzeuginnenraums zu detektieren. Diese Detektion dient jedoch insbesondere dazu, die Qualität der zuvor durchgeführten Innenraumreinigung zu evaluieren. Insbesondere kann der mit dem zweiten Kontrollmodul erfasste Ist-Zustand mit einem mit der Innenraumreinigung angestrebten Soll-Zustand verglichen werden. Bevorzugt ist das zweite Kontrollmodul ganz oder teilweise identisch zu dem ersten Kontrollmodul ausgebildet, beispielsweise als Scanbrücke oder dergleichen, wie vorstehend bereits beschrieben.

Das erfindungsgemäße Verfahren erfolgt bevorzugt in einem System zum Durchführen einer Serviceaktion an einem Fahrzeug. Das System weist ferner zumindest eine erfindungsgemäße Servicestation wie vorstehend beschrieben auf. Das System weist ferner eine Mehrzahl zum autonomen Durchführen einer Serviceaktion, insbesondere Innenraumreinigung, an dem Fahrzeug ausgebildeter Servicemodule auf. Die Servicemodule sind dabei in der Servicestation angeordnet, beispielsweise in verschiedenen Bereichen eines Gebäudes, oder sind mit der Servicestation assoziiert, beispielsweise in verschiedenen Abschnitten eines Geländes.

Jedes Servicemodul weist bevorzugt ein (drittes) Kommunikationsmodul auf, das bevorzugt ein WLAN- oder Mobilfunk-Modul und vorzugsweise zum Durchführen einer Car2Car oder Car2X Kommunikation ausgebildet ist. Ferner weist jedes Servicemodul eine dritte Steuereinheit auf, die zum Durchführen der Verfahrensschritte des Servicemoduls im erfindungsgemäßen Verfahren ausgebildet ist. Ferner weist jedes Servicemodul ein oder mehrere Mittel zum Durchführen einer Serviceaktion, insbesondere einer Innenraumreinigung, auf.

Besonders bevorzugt weist das zumindest eine Servicemodul zumindest ein zum Durchführen einer Innenraumreinigung des Fahrzeugs ausgebildetes erfindungsgemäßes Servicemodul, wie vorstehend beschrieben, auf. Ebenfalls bevorzugt weist das zumindest eine Servicemodul zumindest ein zum Durchführen einer Außenreinigung des Fahrzeugs ausgebildetes zweites Servicemodul auf. Das zweite Servicemodul ist bevorzugt wie eine aus dem Stand der Technik bekannte automatische Waschstraße ausgebildet und weist bevorzugt Düsen zum Auftrag von zumindest einer Reinigungsflüssigkeit, Bürsten oder Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten und/oder Mittel zum Wachsauftrag, auf. Ebenfalls bevorzugt weist das zweite Servicemodul Mittel zum Transport des Fahrzeugs im Modul auf.

Ebenfalls bevorzugt weist die Servicestation alternativ oder zusätzlich zumindest ein zum Befüllen des Energiespeichers des Fahrzeugs ausgebildetes drittes Servicemodul auf. Das dritte Servicemodul weist dabei insbesondere einen eigenen Energiespeicher, beispielsweise eine Batterie oder einen Kraftstofftank, oder einen Anschluss an ein entsprechendes Versorgungsnetz, beispielsweise an ein Stromnetz oder an eine Kraftstoffzuleitung, auf. Ferner weist das dritte Servicemodul ein Anschlussmodul zum Anschluss an ein Nachfüllelement des Fahrzeugs auf. Das Nachfüllelement des Fahrzeugs ist dabei beispielsweise ein Tankstutzen oder eine Ladebuchse. Ferner weist das Anschlussmodul bevorzugt einen Roboterarm auf, der ein an das Nachfüllelement des Fahrzeugs angepasstes Befüllelement aufweist. Das Befüllelement ist vorteilhaft über eine Zuleitung mit dem Energiespeicher verbunden. Bevorzugt ist das dritte Servicemodul für Hybridfahrzeuge ausgebildet und weist ein mit dem Stromnetz verbundenes erstes Befüllelement zum Anschluss einer Ladebuchse und ein mit einer Kraftstoffzuleitung verbundenes zweites Befüllelement zum Anschluss eines Tankstutzens auf.

Ferner bevorzugt weist die Servicestation des Systems zum Durchführen einer Serviceaktion ein zum Wechseln der Reifen des Fahrzeugs ausgebildetes viertes Servicemodul auf. Das vierte Servicemodul weist dabei ein Lager für eine Vielzahl von Ersatzrädern und ein automatisches Regalsystem oder dergleichen zur automatischen Entnahme eines Satzes von Ersatzrädern aus dem Lager auf. Ferner bevorzugt weist das vierte Servicemodul einen Roboterarm zum automatischen Wechseln der Reifen des Fahrzeugs mit den Ersatzrädern auf.

Das System weist ferner bevorzugt zumindest einen, zur Kommunikation mit dem zumindest einen autonomen Fahrzeug und zumindest einer Servicestation eingerichteten Server auf. Bei dem Server handelt es sich bevorzugt um einen Server eines Rechenzentrums eines Anbieters von Carsharing-Dienstleistungen (Flottenbetreiber), eines Anbieters von Reinigungsdiensten oder eines Fahrzeugherstellers. Der Server weist insbesondere ein (viertes) Kommunikationsmodul auf, das als WLAN- oder Mobilfunk-Modul und vorzugsweise zum Durchführen einer Car2Car oder Car2X Kommunikation ausgebildet ist. Der Server ist ferner zum Vermitteln einer Kommunikation zwischen dem Fahrzeug und der Servicestation ausgebildet. Mit anderen Worten ist der Server dazu ausgebildet, von der Servicestation oder dem Fahrzeug empfangene Daten an das Fahrzeug oder die Servicestation weiterzuleiten.

Ebenfalls bevorzugt ist der Server dazu ausgebildet, eine Auslastung einer autonomen Fahrzeugflotte zu ermitteln. Hierbei ist das mit Bezug zum erfindungsgemäßen Verfahren beschriebene Fahrzeug ein Teil der autonomen Fahrzeugflotte. Der Server ist zur Kommunikation mit den autonomen Fahrzeugen eingerichtet. Gemäß einer bevorzugten Durchführungsform erfolgt eine Bestimmung einer Auslastung der autonomen Fahrzeugflotte durch den Server und basierend auf von den Fahrzeugen generierten Auslastungsdaten. Die Auslastungsdaten können dabei die Anzahl von Nutzeranfragen, durchschnittliche Fahrzeiten und Fahrtlängen berücksichtigen. Ebenso können zusätzliche Informationen berücksichtigt werden, die eine hohe Nachfrage wahrscheinlich machen, wie Beginn und Ende eines Großereignisses, wie beispielsweise ein Sportereignis, ein Konzert, etc.

Ein weiterer Aspekt der vorliegenden Erfindung betrifft ein Fahrzeug, insbesondere ein autonomes Flottenfahrzeug, zum Durchführen einer erfindungsgemäßen Innenraumreinigung, wie vorstehend beschrieben. Das erfindungsgemäße Fahrzeug weist ein zum Herstellen zumindest einer Kommunikationsverbindung eingerichtetes (erstes) Kommunikationsmodul auf. Das Kommunikationsmodul ist bevorzugt ein WLAN- oder Mobilfunk-Modul und ist vorzugsweise zum Durchführen einer Car2Car oder Car2X Kommunikation ausgebildet und insbesondere zum Herstellen einer Kommunikationsverbindung mit einer Servicestation ausgebildet. Das Fahrzeug weist zudem zumindest eine Zulaufschnittstelle zum Einleiten eines flüssigen Reinigungsmediums auf, die an eine Zuleitung einer Servicestation, wie vorstehend beschrieben, zum Einleiten des flüssigen Reinigungsmediums ankoppelbar ist.

Das Fahrzeug weist ferner eine zum Durchführen eines erfindungsgemäßen Verfahrens, wie vorstehend beschrieben, eingerichtete Steuereinheit auf. Die Steuereinheit ist insbesondere dazu ausgebildet, mit einer Steuereinheit einer Servicestation und/oder eines Servicemoduls zu kommunizieren. Die Steuereinheit übermittelt der Servicestation beispielsweise Informationen zur Lage zumindest einer Zulaufschnittstelle des Fahrzeugs und ermöglicht der Servicestation somit vorteilhaft den fluiddichten Anschluss des zumindest einen Koppelabschnitts der Zuleitung an die Zulaufschnittstelle. Bevorzugt ist die Steuereinheit ferner zum Öffnen eines mit der Zulaufschnittstelle verbundenen Ventils ausgestattet, um das Befüllen des Fahrzeuginnenraums mit dem fluiden Reinigungsmedium zu ermöglichen. Ebenfalls bevorzugt ist die Steuereinheit dazu ausgebildet, den Fahrzeuginnenraum zumindest teilweise fluiddicht abzudichten, um das Befüllen des Fahrzeuginnenraums mit dem fluiden Reinigungsmedium zu ermöglichen. Bevorzugt ist die Steuereinheit dazu ausgebildet, zumindest eine Ablassöffnung des Fahrzeugs zu öffnen, um das Ableiten des Reinigungsmediums zu ermöglichen.

In einer bevorzugten Ausführungsform des erfindungsgemäßen Verfahrens ist der Innenraum des Fahrzeugs bis zu einer bestimmten Höhe als fluiddichte Wanne ausgebildet. Beispielsweise ist ein Bodenbereich des Fahrzeugs als fluiddichte Wanne ausgebildet und ermöglicht somit das Einleiten des fluiden Reinigungsmediums zur vollständigen Immersion des Fahrzeugbodens in dem Reinigungsmedium. Ebenfalls bevorzugt ist der Fahrzeuginnenraum bis zur Unterkante von Fensteröffnungen und abgesehen von den Fahrzeugtüren als fluiddichte Wanne ausgebildet. In einer alternativ bevorzugten Ausführungsform ist der Fahrzeuginnenraum bis zu einer bestimmten Höhe fluiddicht beziehungsweise fluiddicht abdichtbar ausgebildet. Mit anderen Worten sind alle Öffnungen des Fahrzeuginnenraums mittels Dichtungen fluiddicht abgedichtet oder durch verstellbare Elemente fluiddicht abdichtbar.

In einer besonders bevorzugten Ausführungsform sind beispielsweise Lüftungsöffnungen einer Klimaanlage mit Lüftungsklappen versehen, die fluiddicht verschließbar beziehungsweise abdichtbar sind. Ebenfalls bevorzugt sind alle Türfalze und Fensteröffnungen etc. fluiddicht abgedichtet, sofern das Fenster oder die Tür geschlossen sind. Ferner bevorzugt sind alle Komponenten im Fahrzeuginneren ausreichend stabil für eine darauf lastende Flüssigkeitssäule des flüssigen Reinigungsmediums ausgebildet. Das erfindungsgemäße Fahrzeug, insbesondere dessen Innenraum, ist somit derart ausgebildet, dass das flüssige Reinigungsmedium bis zum Erreichen eines der abgedichteten oder abdichtbaren Höhe entsprechenden Flüssigkeitspegels in den Innenraum des Fahrzeugs einleitbar ist, ohne dass das Reinigungsmedium unbeabsichtigt aus dem Fahrzeuginnenraum leckt.

In einer bevorzugten Ausführungsform des erfindungsgemäßen Verfahrens ist zumindest eine Oberfläche zumindest einer Fahrzeugkomponente im Innenraum des Fahrzeugs zum vollständigen Tauchen in dem flüssigen Reinigungsmedium ausgebildet. Beispielsweise ist zumindest eine Oberfläche wasserdicht ausgebildet und insbesondere chemisch stabil gegenüber Reinigungszusätzen des Reinigungsmediums ausgebildet. Ebenfalls bevorzugt ist die Oberfläche dicht gegenüber einem die Oberfläche vollständig bedeckenden Reinigungsmedium ausgebildet. Insbesondere elektrische Komponenten tragende Oberflächen, wie beispielsweise eine ein Display aufweisende Mittelkonsole, sind fluiddicht ausgebildet, um die dahinterliegende Elektronik vor dem flüssigen Reinigungsmedium zu schützen.

Ebenfalls bevorzugt weist das erfindungsgemäße Fahrzeug eine Mehrzahl von Zulaufschnittstellen, insbesondere eine Mehrzahl von in unterschiedlichen Höhen angeordnete Zulaufschnittstellen auf. Die Zulaufschnittstellen sind dabei jeweils mit der Zuleitung, insbesondere dem Koppelabschnitt, einer erfindungsgemäßen Servicestation verbindbar. Die Mehrzahl von Zulaufschnittstellen erlaubt somit vorteilhaft das Einleiten des flüssigen Reinigungsmediums in und ebenfalls vorteilhaft bis zu verschiedenen Höhen des Fahrzeugs. Alternativ oder zusätzlich weist das Fahrzeug zumindest einen, bevorzugt eine Mehrzahl in verschiedenen Höhen angeordneter Füllstandsensoren auf. Diese ermöglichen vorteilhaft das Ansteigen des flüssigen Reinigungsmediums im Innenraum bis zu einem bestimmten Pegel. Ferner bevorzugt weist das Fahrzeug zumindest ein, bevorzugt eine Mehrzahl von in verschiedenen Höhen angeordneten Mitteln zum Erzeugen einer Strömung auf. Bei den Mitteln zur Strömungserzeugung handelt es sich bevorzugt um Düsen oder Rotoren oder dergleichen. Die Strömungen können vorteilhaft eingesetzt werden, um den Reinigungseffekt zu verbessern.

Das erfindungsgemäße Fahrzeug weist ferner bevorzugt zumindest einen zum Erfassen von Umgebungsdaten ausgebildeten ersten Sensor und zumindest einen zum Erfassen von Fahrzeugdaten ausgebildeten zweiten Sensor aufweist. Der zumindest eine erste Sensor erlaubt dabei ein Erfassen von Umgebungs- beziehungsweise Umweltinformationen und der zumindest eine zweite Sensor erlaubt ein Erfassen von fahrzeugeigenen Informationen. Das Fahrzeug weist ferner ein zum Durchführen autonomer Fahrmanöver ausgebildetes Fahrsystem auf, das bevorzugt zur vollständigen Quer- und Längsführung des Fahrzeugs ausgebildet ist. Ferner weist das erfindungsgemäße Fahrzeug bevorzugt zumindest einen Energiespeicher, beispielsweise ein Batteriesystem, und/oder einen Kraftstoff- oder Wasserstofftank auf.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems zur Durchführung der erfindungsgemäßen Verfahren, aufweisend ein autonomes Fahrzeug, eine Servicestationen mit Servicemodul und einen Server;
- Figur 2: eine schematische Darstellung eines Betriebsbereichs zur Durchführung des erfindungsgemäßen Verfahrens;
- Figur 3: eine schematische Darstellung eines Ablaufdiagrams eines erfindungsgemäßen Verfahrens; und
- Figur 4: eine schematische Darstellung einer erfindungsgemäßen Servicestation gemäß einer Ausführungsform.

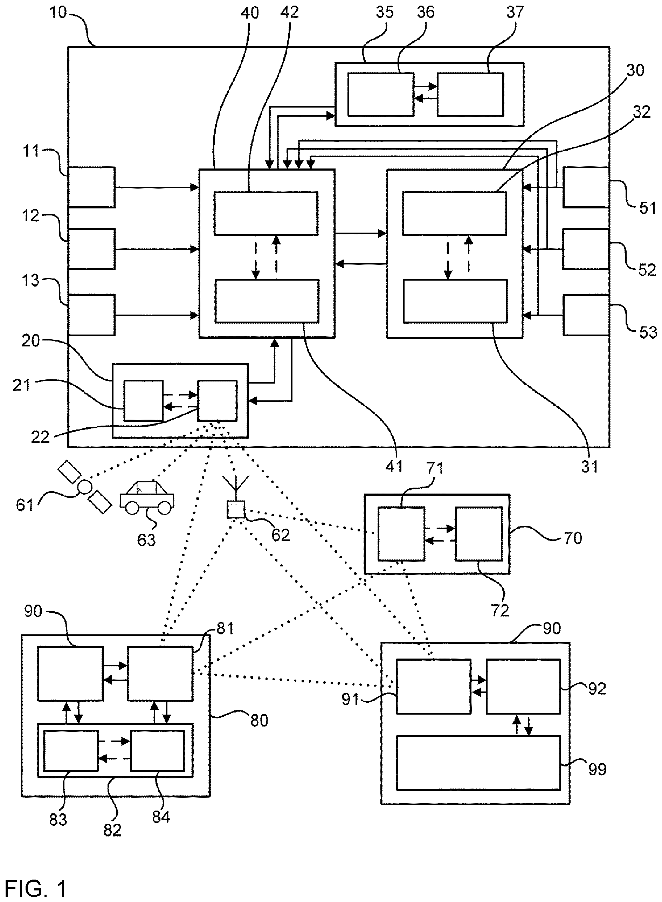

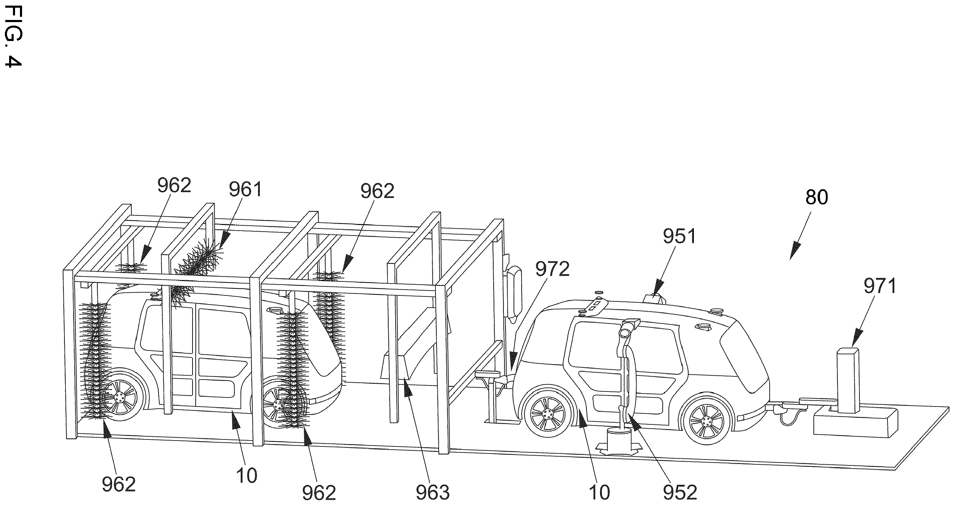

Figur 1 zeigt eine schematische Darstellung eines Systems zur Durchführung einer Serviceaktion an dem Kraftfahrzeug 10, insbesondere zur Innenraumreinigung des Fahrzeugs 10. Das System weist ein autonomes Fahrzeug 10, einen Server 70, eine Servicestation 80 und ein Servicemodul 90, insbesondere wie mit Bezug zu der Figur 4 beschrieben, auf.

Figur 1 zeigt ein zweispuriges Fahrzeug 10 mit Elektromotor 37, das eine Vielzahl erster Sensoren, insbesondere einen ersten Sensor 11, einen zweiten Sensor 12, und einen dritten Sensor 13 aufweist. Die ersten Sensoren 11, 12, 13 sind zum Erfassen von Umgebungsdaten des Fahrzeugs 10 eingerichtet und umfassen beispielsweise Temperatursensoren zum Erfassen einer Umgebungstemperatur, eine Kamera zum Erfassen eines Bildes einer das Fahrzeug 10 unmittelbar umgebenden Umwelt, ein Mikrofon zum Erfassen von Geräuschen einer das Fahrzeug 10 unmittelbar umgebenden Umwelt, Abstandssensoren wie beispielsweise Ultraschallsensoren, LIDAR oder dergleichen zum Erfassen von Abständen zu das Fahrzeug 10 umgebenden Objekten. Die ersten Sensoren 11, 12, 13 übertragen die von ihnen erfassten Umgebungssignale an eine erste Steuereinheit 40 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren 51, 52, 53 handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen.

Darüber hinaus sind zumindest einige der zweiten Sensoren 51, 52, 53 zum Erfassen eines Verschmutzungsgrads des Fahrzeugs 10 ausgebildet. Die dafür ausgebildeten zweiten Sensoren 51, 52, 53 umfassen beispielsweise eine Innenraumkamera zum Erfassen von Bildsignalen des Fahrzeuginnenraums, eine Dashboard-Kamera zum Erfassen von Bildsignalen der Motorhaube, eine Kamera in einem Seitenspiegel zum Erfassen von Bildsignalen einer Seitentür des Fahrzeugs und anderweitige Sensoren zum Erfassen einer Verschmutzung, beispielsweise anhand eines Reflektiongrades des Fahrzeuglacks oder dergleichen. Die zweiten Sensoren 51, 52, 53 übermitteln die von ihnen erfassten Zustandssignale an die erste Steuereinheit 40 des Fahrzeugs 10. Darüber hinaus übermitteln zumindest einige der zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Ebenfalls bevorzugt ist der Transponder 22 zur Kommunikation via Mobilfunknetz, beispielsweise ein LTE, LTE-A oder 5G Mobilfunknetz ausgebildet. Der Transponder 22 kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation oder dergleichen an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70, insbesondere einem vierten Kommunikationsmodul 71 des Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet, mit einem zweiten Kommunikationsmodul 81, einer Servicestation 80 und mit einem dritten Kommunikationsmodul 91 eines Servicemoduls 90 zu kommunizieren. Die Kommunikation erfolgt bevorzugt direkt über eine V2X Kommunikation oder über ein Mobilfunknetz. Die Kommunikation über das Mobilfunknetz erfolgt über ein oder mehrere Basisstationen 62.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Fahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Zumindest ein Teil der zweiten Sensoren 51, 52, 53, des Fahrzeugs 10 übermittelt seine Messergebnisse direkt an das Fahrsystem 30. Bei diesen unmittelbar an das Fahrsystem übermittelten Daten handelt es sich insbesondere um aktuelle Lage- und Bewegungsinformationen des Fahrzeugs 10. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug 10 kann es sich darüber hinaus um ein Hybridfahrzeug handeln, welches einen Wasserstofftank zum Versorgen eines im Fahrzeug 10 angeordneten Brennstoffzellensystems aufweist.

Das Fahrzeug 10 weist ferner eine erste Steuereinheit 40 auf, welche zum Durchführen von Verfahrensschritten des Fahrzeugs zum Durchführen einer Serviceaktion eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Das System zum Durchführen des erfindungsgemäßen Verfahrens weist ferner bevorzugt einen Server 70 auf. Der Server 70 wird bevorzugt von einem Flottenbetreiber einer autonomen Fahrzeugflotte, beispielsweise im Rahmen eines Carsharing-Konzepts, von einem Serviceanbieter für Fahrzeugreinigungen und/oder von einem Fahrzeughersteller betrieben. Der Server 70 weist ein viertes Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine vierte Steuereinheit 72 auf. Das System zum Durchführen einer Serviceaktion weist ferner eine Servicestation 80 und zumindest ein Servicemodul 90 auf.

Die Servicestation 80 weist ein zweites Kommunikationsmodul 81 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem dritten Kommunikationsmodul 91 eines Servicemoduls 90 ausgebildet ist. Insbesondere ist das zweite Kommunikationsmodul 81 zur Kommunikation mit dem gleichen Protokoll wie das erste Kommunikationsmodul 20 des Fahrzeugs 10, wie das vierte Kommunikationsmodul 71 des Servers 70 und wie das dritte Kommunikationsmodul 91 des Servicemoduls 90 eingerichtet.

Darüber hinaus weist die Servicestation 80 eine Steuereinheit 82 auf, welche einen Speicher 83 und eine CPU 84 aufweist, die über einen geeigneten Datenbus, beispielsweise einen CAN-Bus oder SPI-Bus, miteinander kommunizieren. Die Steuereinheit 82 ist insbesondere zum Durchführen der Schritte der Servicestation 80 im erfindungsgemäßen Verfahren eingerichtet. Die Servicestation 80 weist ferner zumindest ein Servicemodul 90, bevorzugt mehrere Servicemodule 90, auf, dessen Komponenten denen des im Folgenden erläuterten separaten Servicemoduls 90 entsprechen. Die Servicestation 80 weist somit zumindest ein Servicemodul 90 auf und/oder ist mit zumindest einem eigenständigen Servicemodul 90 assoziiert. Jedes der Servicemodule 90 ist zur Kommunikation mit der zweiten Steuereinheit 82 ausgebildet. Die zweite Steuereinheit 82 ist dazu ausgebildet, in Kommunikation mit dem zweiten Kommunikationsmodul 81 und dem zumindest einen Servicemodul 90 die von der Servicestation 80 durchgeführten Schritte des erfindungsgemäßen Verfahrens durchzuführen.

Das erfindungsgemäße System weist zumindest ein Servicemodul 90 auf. Das Servicemodul 90 weist ein drittes Kommunikationsmodul 91 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem zweiten Kommunikationsmodul 81 der Servicestation 80 ausgebildet ist. Insbesondere ist das dritte Kommunikationsmodul 91 zur Kommunikation mit dem gleichen Protokoll wie das erste Kommunikationsmodul 20 des Fahrzeugs 10, das vierte Kommunikationsmodul 71 des Servers 70 und das zweite Kommunikationsmodul 81 der Servicestation 80 eingerichtet. Darüber hinaus kann das Servicemodul 90 eine dritte Steuereinheit 92 aufweisen, welche beispielsweise einen Speicher und eine CPU aufweist, die über einen geeigneten Datenbus, beispielsweise einen CAN-Bus oder SPI-Bus, miteinander kommunizieren. Die dritte Steuereinheit 92 ist insbesondere, bevorzugt allein oder zusätzlich zur Steuereinheit 82, zum Durchführen der Schritte des Servicemoduls 90 im erfindungsgemäßen Verfahren ausgebildet.

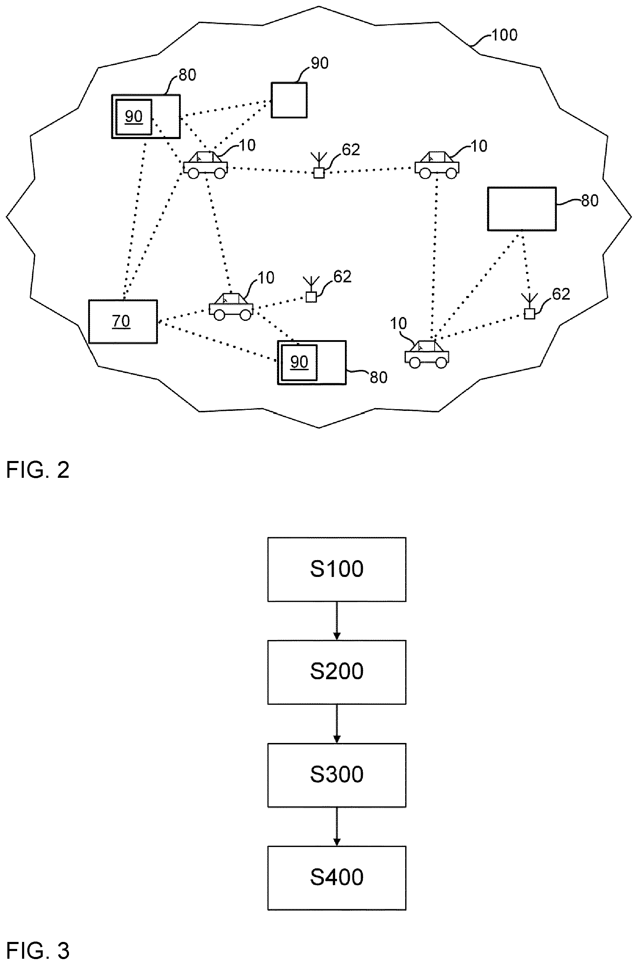

Figur 2 zeigt eine schematische Darstellung eines Betriebsbereichs 100 zur Durchführung der erfindungsgemäßen Verfahren unter Verwendung des in Figur 1 dargestellten Systems. Der Betriebsbereich 100 erstreckt sich bevorzugt über ein urbanes Ballungsgebiet, beispielsweise eine Stadt oder ein Stadtzentrum. Innerhalb des Betriebsbereichs 100 befindet sich eine Vielzahl autonomer Fahrzeuge 10, von denen jedes eine grundlegende Konfiguration, wie mit Bezug zu Figur 1 erläutert, aufweist. Jedes der autonomen Fahrzeuge 10 ist dabei von Nutzern eines Carsharing-Dienstes abrufbar oder aber einem bestimmten Nutzer dauerhaft zugeordnet.

Der Betriebsbereich 100 weist eine Vielzahl von Servicestationen 80 und Servicemodulen 90 auf. Ferner ist ein Server 70 im Betriebsbereich 100 angeordnet. Die autonomen Fahrzeuge 10 sind zur Kommunikation untereinander, insbesondere mittels der ersten Kommunikationsmodule 20 und via Basisstationen 62 eines Mobilfunknetzes, ausgebildet. Die Fahrzeuge 10 sind ferner zur Kommunikation mit den Servicestationen 80, den Servicemodulen 90 und dem Server 70 ausgebildet. Die Kommunikation erfolgt dabei direkt zwischen diesen Elementen oder über Basisstationen 62 eines Mobilfunknetzes. Darüber hinaus sind auch die anderen Komponenten des in der Figur 1 dargestellten Systems zur direkten oder indirekten Kommunikation miteinander ausgebildet, wie beispielsweise eine Servicestation 80 mit dem Server 70 und Servicemodulen 90 und der Server 70 mit den Servicemodulen 90. Kommunikationsverbindungen sind in Figur 2 mit den gestrichelten Linien angedeutet.

Figur 3 zeigt eine schematische Darstellung eines Ablaufdiagrams eines erfindungsgemäßen Verfahrens, insbesondere eines erfindungsgemäßes Verfahrens zur Innenraumreinigung eines Fahrzeugs in einer erfindungsgemäßen Servicestation 80. In einem ersten Schritt S100 des erfindungsgemäßen Verfahrens wird ein fluides Reinigungsmedium mittels einer an einem Roboterarm 951 ,952 befestigten Zuleitung, einen Koppelabschnitt der Zuleitung und eine Zulaufschnittstelle eines Fahrzeugs 10 in den Innenraum des Fahrzeugs 10 eingeleitet.

In einem zweiten Schritt S200 erfolgt eine Immersion, insbesondere ein vollständiges Tauchen, zumindest einer Fahrzeugkomponente, beispielsweise eines Fahrzeugbodens oder eines Fahrzeugsitzes, in dem eingeleiteten flüssigen Reinigungsmedium. Dadurch werden Verschmutzungen von den Oberflächen der Fahrzeugkomponenten abgelöst und im flüssigen Reinigungsmedium gelöst. Die Reinigungswirkung wird gegebenenfalls durch Erzeugen einer Strömung in dem in dem Fahrzeug befindlichen flüssigen Reinigungsmedium verstärkt.

In einem dritten Schritt S300 erfolgt ein Ablassen des flüssigen Reinigungsmediums und darin gelöster Verschmutzungen durch Öffnen zumindest einer Ablassöffnung des Fahrzeugs 10. Bei der Ablassöffnung handelt es sich um Fenster und Türen des Fahrzeugs 10 oder um speziell zum Ablassen des Reinigungsmediums vorgesehene Ablassöffnungen. Das abgelassene Reinigungsmedium fließt bevorzugt durch zumindest einen Abfluss der Servicestation ab.

In einem Schritt S400 des erfindungsgemäßen Fahrzeugs erfolgt ferner ein Trocknen des Fahrzeuginnenraums, insbesondere des darin verbliebenen flüssigen Reinigungsmediums. Das Trocknen des Fahrzeuginnenraums erfolgt dabei mittels eines an dem Roboterarm 951, 952 befestigten Trockenfön, der in das Fahrzeuginnere, insbesondere in schwer zugängliche Bereiche davon, eingeführt wird. Zusätzlich wird mittels einer Belüftungsanlage, insbesondere einer Klimaanlage des Fahrzeugs 10 trockene und warme Luft ins Fahrzeuginnere eingeleitet.

Figur 4 zeigt eine schematische Darstellung einer erfindungsgemäßen Servicestation 80, aufweisend ein erstes Servicemodul 95 und ein zweites Servicemodul 96 gemäß einer Ausführungsform. In der Servicestation 80 sind das erste Servicemodul 95 und das zweite Servicemodul 96 in verschiedenen Bereichen der Servicestation 80 angeordnet.

Bei dem ersten Servicemodul 95 handelt es sich um ein Servicemodul 95 einer erfindungsgemäßen Servicestation 80 zur Innenraumreinigung des Fahrzeugs 10. Das Servicemodul 95 weist einen ersten Roboterarm 951 und/oder einen zweiten Roboterarm 952 mit jeweils daran angeordneten Zuleitungen für ein fluides Reinigungsmedium auf. Das in Figur 3 gezeigte erste Servicemodul 95 weist ferner einen Ladeanschluss 971 zum Auffüllen eines elektrischen Energiespeichers 36 des Fahrzeugs 10 auf.

Bei dem zweiten Servicemodul 96 handelt es sich um ein weiteres Servicemodul zur Außenreinigung des Fahrzeugs 10. Das zweite Servicemodul 96 entspricht weitgehend aus dem Stand der Technik bekannten automatischen Waschstraßen zur autonomen Außenreinigung eines Fahrzeugs 10. Das zweite Servicemodul 96 weist insbesondere nicht dargestellte Mittel zum Auftrag eines Reinigungsfluides auf, wie beispielsweise Düsen zum Auftrag einer Seifenlaufe. Darüber hinaus weist das zweite Servicemodul 96 eine rotierbare obere Waschbürste 961 und rotierbare seitliche Waschbürsten 962 zum Verteilen des Reinigungsfluides und zum Lösen des Schmutzes auf. Ferner weist das zweite Servicemodul 96 einen Trockenfön 963 zum Trocknen des Fahrzeugs 10 auf.

Ein Ablauf der autonom durchgeführten Serviceaktion in der Servicestation 80 beginnt mit der autonomen Einfahrt des Fahrzeugs 10 in einen ersten Bereich der Servicestation 80. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 81 mit der Steuereinheit 82 der Servicestation 80 kommuniziert. Bei der Einfahrt des Fahrzeugs wird mittels eines nicht dargestellten ersten Kontrollmoduls ein Verschmutzungsgrad des Fahrzeuginnenraums und gegebenenfalls der Fahrzeugoberfläche erfasst. Sofern das Fahrzeug 10 in der Servicestation 80 eine Halteposition erreicht hat, beginnt die Außenreinigung des Fahrzeugs 10 mittels dem im ersten Bereich angeordneten zweiten Servicemodul 96, insbesondere mittels der Waschbürsten 961, 962 und dem Trockenfön 963 Sobald die Außenreinigung abgeschlossen ist, erfolgt gegebenenfalls mittels nicht dargestellter Kameras oder Sensoren eine Überprüfung der Außenreinigung des Fahrzeugs 10.

Sobald die Außenreinigung und/oder die Überprüfung abgeschlossen ist, fährt das Fahrzeug 10 autonom zu einem dem ersten Bereich nachgelagerten zweiten Bereich der Servicestation 80 oder wird mittels eines Transportbands der Servicestation 80 zum zweiten Bereich transportiert. Sofern das Fahrzeug im zweiten Bereich der Servicestation 80 eine Halteposition erreicht hat, wird dies von Sensoren der Servicestation 80 und/oder des Fahrzeugs 10 detektiert. Ferner ermittelt die Steuereinheit 82 der Servicestation und/oder die Servicestation 92 des Servicemoduls 95 die Lage zumindest einer Zulaufschnittstelle des Fahrzeugs 10. Daraufhin werden der erste Roboterarm 951 und/oder der zweite Roboterarm 952 mit den jeweils daran angeordneten Zuleitungen für ein fluides Reinigungsmedium an die Zulaufschnittstelle des Fahrzeugs 10 geführt und dort mittels des Koppelabschnitts der Zuleitung fluiddicht mit der Zulaufschnittstelle verbunden. Sobald der fluiddichte Anschluss der Zuleitung detektiert ist, werden etwaige Ventile im Fahrzeug 10 und der Zuleitung geöffnet und das fluide Reinigungsmedium in den Fahrzeuginnenraum eingeleitet. Nach einer gewissen Zeit erfolgt das Ableiten des fluiden Reinigungsmediums, beispielsweise durch Öffnen zumindest eines Fahrzeugfensters gefolgt vom Öffnen zumindest einer Fahrzeugtür. Nachfolgend wird mittels des Ladeanschluss 971 ein elektrischer Energiespeicher 36 des Fahrzeugs 10 befüllt und wird mittels Wasserstoffbetankung 972 der Wasserstofftank des Fahrzeugs 10 gefüllt. Gegebenenfalls erfolgt über nicht dargestellte Kameras oder andere Sensoren eines zweiten Kontrollmodules 99 eine Überprüfung der Innenreinigung des Fahrzeugs 10. Ist diese Überprüfung abschlossen fährt das Fahrzeug 10 autonom aus der Servicestation 80 heraus.

### Bezugszeichenliste

- 10: Kraftfahrzeug
- 11: erster Sensor
- 12: zweiter Sensor
- 13: dritter Sensor
- 18: Fahrzeugtür

- 20: erstes Kommunikationsmodul
- 21: Speicher
- 22: Transponder

- 30: Fahrsystem
- 31: Speicher
- 32: CPU
- 35: elektrisches Fahrsystem
- 36: elektrischer Energiespeicher
- 37: Elektromotor

- 40: erste Steuereinheit
- 41: Speicher
- 42: CPU

- 51: vierter Sensor
- 52: fünfter Sensor
- 53: sechster Sensor

- 61: GPS Satellit
- 62: Mobilfunkstation
- 63: anderes Fahrzeug

- 70: Server
- 71: viertes Kommunikationsmodul
- 72: vierte Steuereinheit
- 80: Servicestation
- 81: zweites Kommunikationsmodul
- 83: Speicher
- 84: CPU

- 90: Servicemodul
- 91: drittes Kommunikationsmodul
- 92: dritte Steuereinheit
- 99: Mittel zum Durchführen einer Serviceaktion
- 951: Roboterarm
- 952: Roboterarm
- 961: obere Waschbürste
- 962: seitliche Waschbürste
- 963: Trockenfön
- 971: Ladeanschluss

## Patentansprüche

1. Verfahren zum Durchführen einer Innenraumreinigung an einem Fahrzeug (10) mittels einer Servicestation (80), das Verfahren aufweisend die Verfahrensschritte:
Einleiten, durch die Servicestation (80), eines flüssigen Reinigungsmediums in einen Innenraum des Fahrzeugs (10) über zumindest eine Zulaufschnittstelle des Fahrzeugs (10);
Immersion zumindest einer Oberfläche zumindest einer Fahrzeugkomponente des Fahrzeuginnenraums, wie ein Fahrzeugsitz oder ein Innenraumboden, in dem Reinigungsmedium; und
Ableiten des flüssigen Reinigungsmediums und darin gelöster Verschmutzungen über zumindest eine Ablaufschnittstelle des Fahrzeugs (10).

2. Verfahren nach Anspruch 1, **dadurch gekennzeichnet, dass** das flüssige Reinigungsmedium bis zum Erreichen eines vorbestimmten Flüssigkeitspegels in den Innenraum des Fahrzeugs eingeleitet wird und/oder dass das flüssige Reinigungsmedium aktiv aus dem Innenraum des Fahrzeugs abgesaugt wird.

3. Verfahren nach Anspruch 1 oder 2, **dadurch gekennzeichnet, dass** zumindest eine Fahrzeugkomponente vollständig in dem flüssigen Reinigungsmedium getaucht und/oder der gesamte Fahrzeuginnenraum mit dem flüssigen Reinigungsmedium gefüllt wird.

4. Verfahren nach einem der vorangehenden Ansprüche, **dadurch gekennzeichnet, dass** nach dem Ableiten des flüssigen Reinigungsmediums ein Trocknen des Fahrzeuginnenraums mit einem Trockenfön und/oder eine Belüftungsanlage des Fahrzeugs (10) erfolgt.

5. Servicestation (80) für ein Fahrzeug (10) einer autonomen Fahrzeugflotte mit zumindest einem zum Durchführen einer autonomen Innenraumreinigung des Fahrzeugs (10) ausgebildeten Servicemodul (95), welches zumindest einen Roboterarm (951, 952) mit einer daran angeordneten Zuleitung für ein flüssiges Reinigungsmedium und eine zur Steuerung des Roboterarms (951, 952) und zum Durchführen eines Verfahrens nach einem der Ansprüche 1 bis 4 eingerichtete Steuereinheit (82) aufweist, wobei die Zuleitung einen flexiblen Abschnitt und einen Koppelabschnitt umfasst und zum Einleiten des flüssigen Reinigungsmediums in den Innenraum des Fahrzeugs (10) mittels des Koppelabschnitts an zumindest eine Zulaufschnittstelle des Fahrzeugs (10) fluiddicht ankoppelbar ist.

6. Servicestation (80) nach Anspruch 5, wobei in dem Servicemodul (95)
zumindest ein Ablauf für das Reinigungsmedium angeordnet ist und/oder die Zuleitung zum Ableiten des Reinigungsmediums aus dem Fahrzeuginnenraum ausgebildet ist und/oder
zumindest ein Trockenfön zum Trocknen des Fahrzeuginnenraums angeordnet ist.

7. Fahrzeug (10) zum Durchführen einer Innenraumreinigung in einem Verfahren nach einem der Ansprüche 1 bis 4, aufweisend ein zum Herstellen zumindest einer Kommunikationsverbindung mit einer Servicestation (80) eingerichtetes erstes Kommunikationsmodul (20), eine zum Durchführen eines Verfahrens nach einem der Ansprüche 1 bis 4 eingerichtete Steuereinheit (40) und zumindest eine Zulaufschnittstelle zum Einleiten eines flüssigen Reinigungsmediums in einen Fahrzeuginnenraum, die an eine Zuleitung einer Servicestation (80) zum Einleiten des flüssigen Reinigungsmediums ankoppelbar ist.

8. Fahrzeug (10) nach Anspruch 7, **dadurch gekennzeichnet, dass** der Innenraum des Fahrzeugs bis zu einer bestimmten Höhe als fluiddichte Wanne ausgebildet und/oder fluiddicht ausgebildet ist und das flüssige Reinigungsmedium bis zum Erreichen eines der Höhe entsprechenden Flüssigkeitspegels in den Innenraum des Fahrzeugs einleitbar ist.

9. Fahrzeug (10) nach Anspruch 7 oder 8, **dadurch gekennzeichnet, dass** zumindest eine Oberfläche zumindest einer Fahrzeugkomponente im Innenraum des Fahrzeugs (10) zum vollständigen Tauchen in dem flüssigen Reinigungsmedium ausgebildet ist.

10. Fahrzeug (10) nach einem der Ansprüche 7 bis 9, **dadurch gekennzeichnet, dass** eine Mehrzahl von Zulaufschnittstellen, Füllstandsensoren und/oder Mittel zum Erzeugen einer Strömung in verschiedenen Höhen des Innenraums des Fahrzeugs (10) angeordnet sind.

## Claims

1. Method for performing interior cleaning on a vehicle (10) by means of a service station (80), the method comprising the method steps of:
introducing, by means of the service station (80), a liquid cleaning medium into an interior of the vehicle (10) via at least one inlet interface of the vehicle (10);
immersing at least one surface of at least one vehicle component of the vehicle interior, such as a vehicle seat or an interior floor, in the cleaning medium; and
draining the liquid cleaning medium and the soiling dissolved therein via at least one drainage interface of the vehicle (10).

2. Method according to claim 1, **characterized in that** the liquid cleaning medium is introduced into the interior of the vehicle until a predetermined liquid level is reached **and/or in that** the liquid cleaning medium is actively extracted from the interior of the vehicle.

3. Method according to either claim 1 or claim 2, **characterized in that** at least one vehicle component is completely immersed in the liquid cleaning medium and/or the entire vehicle interior is filled with the liquid cleaning medium.

4. Method according to any of the preceding claims, **characterized in that** after draining of the liquid cleaning medium, the vehicle interior is dried using a blow dryer and/or a ventilation system of the vehicle (10).

5. Service station (80) for a vehicle (10) of an autonomous vehicle fleet, comprising at least one service module (95) designed to perform autonomous interior cleaning of the vehicle (10), which module has at least one robot arm (951, 952) having a supply line for a liquid cleaning medium arranged thereon and a control unit (82) designed to control the robot arm (951, 952) and to carry out a method according to any of claims 1 to 4, wherein the supply line comprises a flexible portion and a coupling portion and can be coupled in a fluid-tight manner to at least one supply interface of the vehicle (10) by means of the coupling portion in order to introduce the liquid cleaning medium into the interior of the vehicle (10).

6. Service station (80) according to claim 5, wherein in the service module (95)
at least one drain for the cleaning medium is arranged and/or the supply line is designed to drain the cleaning medium from the vehicle interior, and/or
at least one blow dryer is arranged for drying the vehicle interior.

7. Vehicle (10) for performing interior cleaning in a method according to any of claims 1 to 4, comprising a first communication module (20) designed to establish at least one communication link to a service station (80), a control unit (40) designed to carry out a method according to any of claims 1 to 4, and at least one inlet interface for introducing a liquid cleaning medium into a vehicle interior, which inlet interface can be coupled to a supply line of a service station (80) for introducing the liquid cleaning medium.

8. Vehicle (10) according to claim 7, **characterized in that** the interior of the vehicle, up to a certain height, is designed as a fluid-tight trough and/or is designed to be fluid-tight, and the liquid cleaning medium can be introduced into the interior of the vehicle until a liquid level corresponding to the height is reached.

9. Vehicle (10) according to either claim 7 or claim 8, **characterized in that** at least one surface of at least one vehicle component in the interior of the vehicle (10) is designed for complete immersion in the liquid cleaning medium.

10. Vehicle (10) according to any of claims 7 to 9, **characterized in that** a plurality of inlet interfaces, filling level sensors and/or means for generating a flow are arranged at different heights of the interior of the vehicle (10).

## Revendications

1. Procédé permettant de réaliser un nettoyage d'habitacle d'un véhicule (10) à l'aide d'une station de service (80), le procédé présentant les étapes de procédé :
d'introduction, par la station de service (80), d'un milieu de nettoyage liquide dans un habitacle du véhicule (10) par l'intermédiaire d'au moins une interface d'alimentation du véhicule (10) ;
d'immersion d'au moins une surface d'au moins un composant de véhicule de l'habitacle du véhicule, tel qu'un siège de véhicule ou un plancher d'habitacle, dans le milieu de nettoyage ; et
d'évacuation du milieu de nettoyage liquide et des salissures qui y sont dissoutes par l'intermédiaire d'au moins une interface d'évacuation du véhicule (10).

2. Procédé selon la revendication 1, **caractérisé en ce que** le milieu de nettoyage liquide est introduit dans l'habitacle du véhicule jusqu'à ce qu'un niveau de liquide prédéterminé soit atteint **et/ou en ce que** le milieu de nettoyage liquide est aspiré activement hors de l'habitacle du véhicule.

3. Procédé selon la revendication 1 ou 2, **caractérisé en ce qu'**au moins un composant du véhicule est complètement immergé dans le milieu de nettoyage liquide et/ou l'intégralité de l'habitacle du véhicule est remplie du milieu de nettoyage liquide.

4. Procédé selon l'une des revendications précédentes,
**caractérisé en ce qu'**après l'évacuation du milieu de nettoyage liquide, on procède à un séchage de l'habitacle de véhicule au moyen d'un séchoir à air chaud et/ou d'un système de ventilation du véhicule (10).

5. Station de service (80) pour un véhicule (10) d'une flotte de véhicules autonomes comportant au moins un module de service (95) conçu pour la réalisation d'un nettoyage d'habitacle autonome du véhicule (10), lequel module présente au moins un bras de robot (951, 952) comportant une conduite d'alimentation pour un milieu de nettoyage liquide disposée sur celui-ci et une unité de commande (82) pour la commande du bras de robot (951, 952) et pour la réalisation d'un procédé selon l'une des revendications 1 à 4, dans laquelle la conduite d'alimentation comprend une section flexible et une section d'accouplement et peut être accouplée de manière étanche aux fluides à au moins une interface d'alimentation du véhicule (10) à l'aide de la section d'accouplement pour l'introduction du milieu de nettoyage liquide dans l'habitacle du véhicule (10).

6. Station de service (80) selon la revendication 5, dans laquelle dans le module de service (95)
au moins une évacuation pour le milieu de nettoyage est disposée et/ou la conduite d'alimentation est conçue pour l'évacuation du milieu de nettoyage hors de l'habitacle du véhicule et/ou
au moins un séchoir à air chaud est disposé pour le séchage de l'habitacle de véhicule.

7. Véhicule (10) permettant de réaliser un nettoyage d'habitacle dans un procédé selon l'une des revendications 1 à 4, présentant un premier module de communication (20) disposé pour l'établissement d'au moins une liaison de communication avec une station de service (80), une unité de commande (40) disposée pour la réalisation d'un procédé selon l'une des revendications 1 à 4 et au moins une interface d'alimentation pour l'introduction d'un milieu de nettoyage liquide dans un habitacle de véhicule, qui peut être accouplée à une conduite d'alimentation d'une station de service (80) pour l'introduction du milieu de nettoyage liquide.

8. Véhicule (10) selon la revendication 7, **caractérisé en ce que** l'habitacle du véhicule est conçu sous la forme d'une cuve étanche aux fluides et/ou est conçu de manière étanche aux fluides jusqu'à une certaine hauteur et le milieu de nettoyage liquide peut être introduit dans l'habitacle du véhicule jusqu'à ce qu'un niveau de liquide correspondant à la hauteur soit atteint.

9. Véhicule (10) selon la revendication 7 ou la revendication 8,
**caractérisé en ce qu'**au moins une surface d'au moins un composant de véhicule dans l'habitacle du véhicule (10) est conçue pour l'immersion complète dans le milieu de nettoyage liquide.

10. Véhicule (10) selon l'une des revendications 7 à 9,
**caractérisé en ce qu'**une pluralité d'interfaces d'alimentation, de capteurs de niveau et/ou de moyens pour la génération d'un flux sont disposés à différentes hauteurs de l'habitacle du véhicule (10).
